# EUROPEAN PATENT APPLICATION

(11) **EP 0 881 175 A1**
(43) Date of publication of application: **02.12.1998**
(21) Application number: 98201668.5
(22) Date of filing: 19.05.1998
(51) Int. Cl.: B65G 57/24, B65G 61/00

(54) **Palletizing device for associated products of various size and shape**

(30) Priority: 26.05.1997 IT MI970373
(71) Applicant: OCME S.r.l., 43100 Parma (IT)
(72) Inventor: Gatteschi, Emanuele, 43100 Parma (IT)
(74) Representative: Appoloni, Romano

(57) **Abstract**

A palletizing device for associated products of various size and shape, comprising a supporting structure composed of a base plate (12) with associated wall-type elements (13,13',13'') extending toward the bottom, so as to form a box-type element turned upside-down and open toward the bottom, capable of accepting a certain number of products of various size and shape (11) placed side by side to form a layer, wherein the lateral wall-type elements (13,13',13'') can be shifted by at least one actuator (14,14';15-19) between a position holding a number of products simply placed side by side and a position in tight contact with the same number of compacted products. In particular, the lateral wall-type elements of the device are arranged so as to be inclined and converging toward each other in the direction of the center of the device.

## Description

This invention refers to a palletizing device for associated products of various size and shape.

The field of product handling, in particular of palletizing products of various size and shape, currently presents certain problems related to the proper stability of the latter, if arranged in a palletized position. It is in fact difficult to produce a device capable of properly grasping and manipulating certain predetermined quantities of products to be stacked in multiple layers. It should be noted that the term "products" used hereinafter stands for packages composed of a certain number of elements to be associated with each other to form a layer.

This difficulty mainly arises from the fact that since the products associated in a layer differ from each other in their size and rigidity, any automatic grasping of such a layer usually results in the dropping off of some of the products grasped.

This is obviously due to the fact that a complete blocking between the various products does not occur, or that not even a sufficient friction is available to allow their shifting relative to each other.

The scope of this invention is to create a palletizing device for associated products of various size and shape capable of overcoming the above-mentioned difficulties and of easily manipulating any layer of products placed side by side to each other.

According to this invention, this scope is achieved by creating a palletizing device for associated products of various size and shape, characterized in that it comprises a supporting structure composed by a base plate with associated lateral wall-type elements extending toward the bottom, so as to form a box-type element turned upside-down and open toward the bottom, capable of accepting a certain number of products of various size and shape placed side by side to each other to form a layer, wherein said lateral wall-type elements can be shifted by at least one actuator between a position containing the mentioned number of products simply in a side by side position and a position establishing a tight contact of the same number of products in a compacted form.

The device of this invention can advantageously grasp the products on all four sides, thus guaranteeing a firm and stable grip, independently of their shape and relative disposition.

The characteristics and advantages of a device according to this invention will be better evident from the following exemplifying and non-limiting description, referred to the enclosed schematic drawings in which:
Figure 1 is a raised, partially sectionalized side view of a palletizing device for associated products of various size and shape according to this invention, shown in an opened position above a group of products to be palletized.
Figure 2 shows a view similar to that of Figure 1, in which the device is lowered over the group of products and blocks them in its interior.

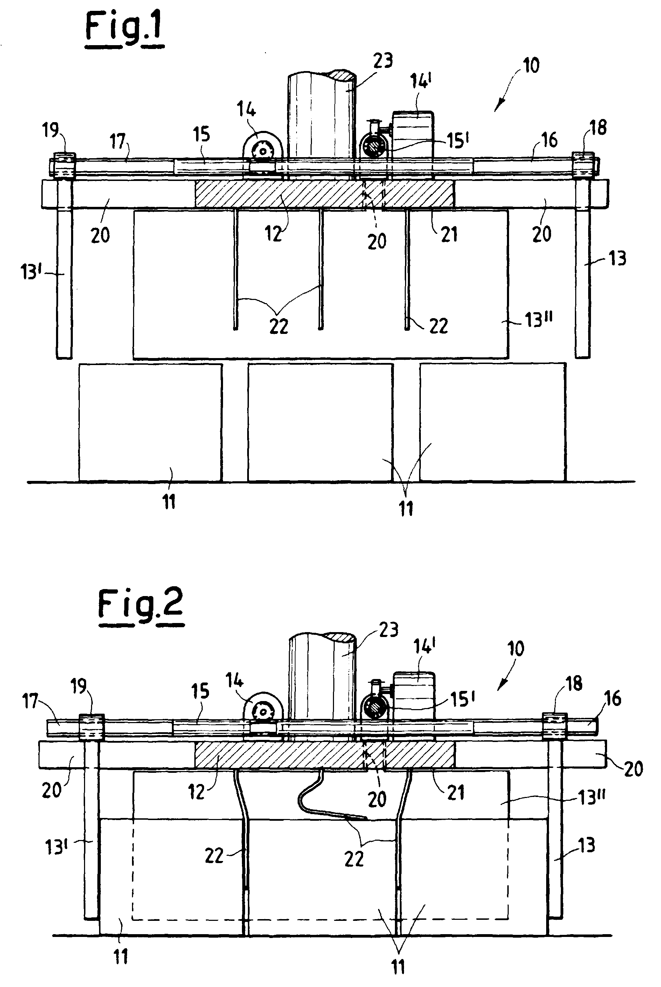

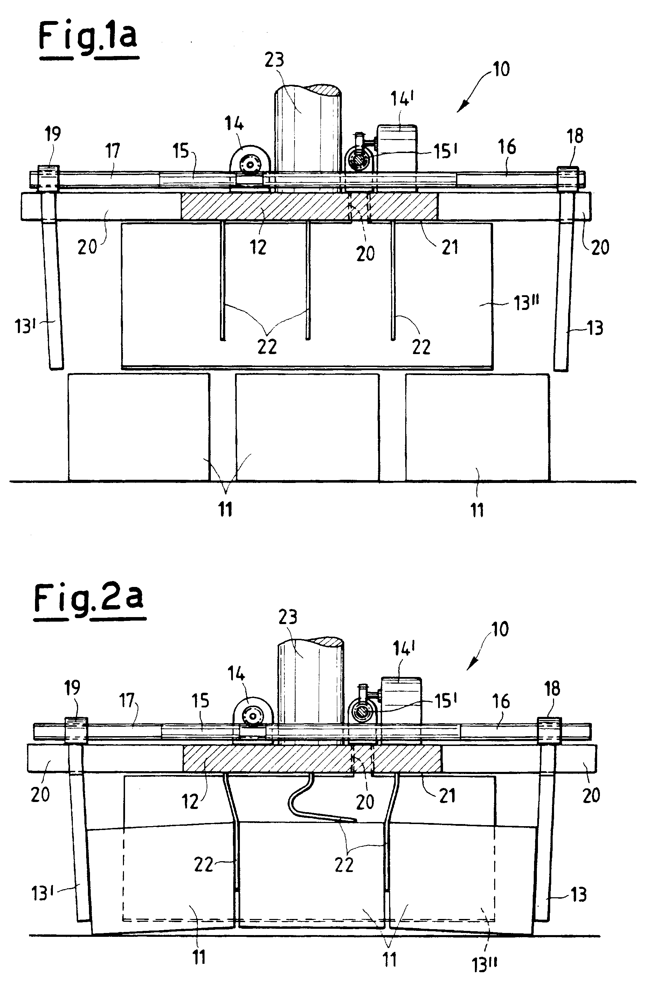

Figures 1a and 2a are views entirely similar to those in Figures 1 and 2, wherein the said wall-type lateral elements are held in an inclined position.

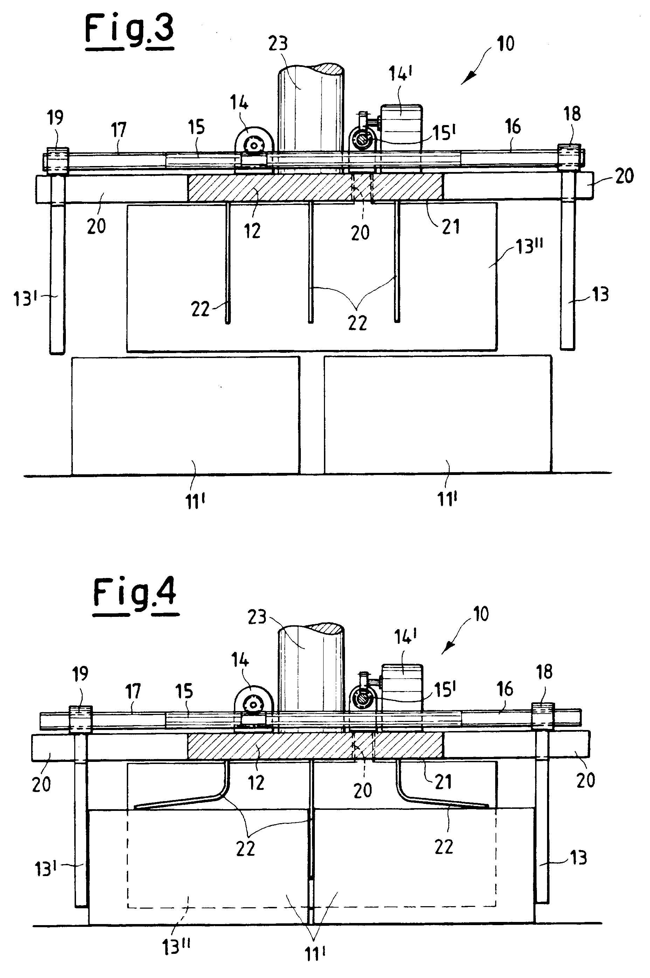

Figures 3 and 4 also show a view similar to that of Figure 1, in which the device is lowered over the group of products and blocks the products in its interior, but with a different arrangement and size of the products.

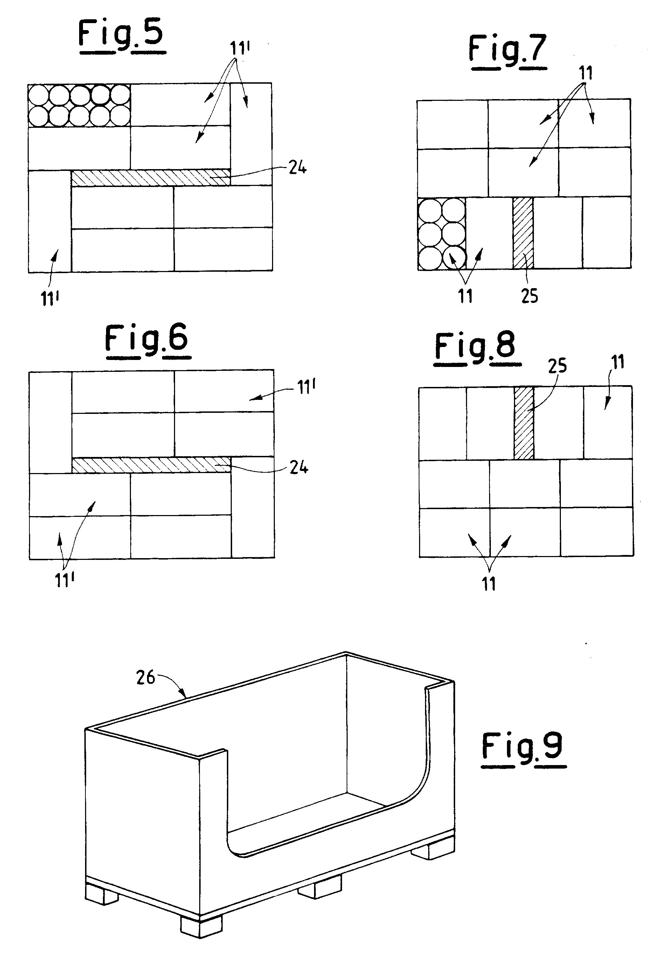

Figures 5, 6, 7 and 8 exemplify different arrangements of products which may be present in a layer composed of the same, and
Figure 9 is a view of box-shaped pallet unit, suitable for use with a device of this invention.

With reference to the figures, a palletizing device for associated products of various size and shape is shown in one of its embodiments, designated in its overall form by the number 10.

This device 10 can be utilized as a palletizing device for the associated products 11, 11' placed side by side to each other and having different sizes and shapes.

The device comprises a supporting structure composed by a base plate 12 with associated lateral wall-type elements extending toward the bottom. The lateral wall-type elements in the example shown are designated by the numbers 13, 13' and 13'' and are placed perpendicular to each other, so as to align themselves along the sides of a hypothetical box-type unit turned upside down and open toward the bottom. This box-type unit, whose fourth lateral wall-type element is not shown, is such as to accept a certain number of associated products 11, 11' of various size and shape placed side by side to each other to form a layer. In the figures these products have been identified as groups of paper rolls 9, of a particularly soft and compressible nature.

An actuating assembly is provided on the upper surface of the base plate 12, so as to make it possible to shift the lateral wall-type elements. In the example shown, this actuating assembly is fitted with a pair of actuators 14 and 14', for example two motorized gear reducers, each capable of controlling a respective rod 15 and 15'. As seen in the figures, the rod 15 engages with the respective actuator 14 in a central area, while its opposed extremities are fitted with threaded sections 16 and 17. These threaded sections 16 and 17 carry a right and left winding thread and are in turn functionally engaged with complementary head screws 18 and 19, which are associated with the lateral wall-type elements 13 and 13', respectively. As regards the rod 15', its structure is not shown, as it is absolutely identical to the one just described.

The base plate 12 is also fitted with eyelets 20 within which the extensions of the lateral wall-type elements 13, 13' and 13'' are shifted to assume their various positions. It can also be noted that from a lower surface 21 of the base plate 12 turned toward the interior of the box-type unit thus described certain elements are hanging toward the bottom 22. These elements 22 may simply be fixed or retractable partitions or flexible or rigid belt-type elements, depending on the specific requirements of the device.

The device also provides for a hooking or suspending element 23 extended so as to support it from a bridge-type supporting assembly or similar setup capable of shifting the device to the various functional positions of grasping, releasing and shifting the products. This hooking or suspending element 23 can be rotated in both a clockwise and counterclockwise direction by 180° or 90°, so as to change the position of a layer relative to another to create a cross-wise palletizing arrangement or to promote the extraction of the pallet.

Figures 1-4 show the operation of the device according to this invention. As can be seen in Figures 1-2, once a certain number of products 11 of a certain size has been arranged to create a group or layer of products, the device 10 is moved to a position above the same, ready to grasp them. It can be seen that in such a position, in Figure 1, the wall-type elements 13, 13' and 13'', as well as the fourth one not shown here, are arranged in a first expanded position, capable of holding the number of products 11 in a simple side by side form.

Figure 2 shows that by lowering the hooking element 23, the device can be moved to a position just above and almost in contact with the products. If the device is fitted with the partition-type or belt-type elements 22, the latter penetrate where possible between the products 11. Alternatively, they can bend over the products themselves, to an arrangement of minimum encumbrance.

The action of the actuators 14 and 14' determines, as shown in Figure 2, the shifting of the lateral wall-type elements 13, 13' and 13'' so as to approach them in a direction toward the products 11 to assume a position of tight contact over the products, thus compacting and allowing them to be gripped. In order to maintain a constant tightening or compacting pressure, the use of a compensating element (not shown), for example of a pneumatic type, may be contemplated.

The device is then again ready to be lifted and to place the group of products on a pallet, not shown here, to form a first layer. The device for grasping and positioning the products is actuated in a similar manner, so as to create a second layer and the subsequent layers until the pallet is completed with the desired and required quantities.

The device of this invention is advantageously operated in the same manner in the presence of products 11' of a different size, as shown in Figures 3 and 4. It is immediately evident that in this second example the partition-type or belt-type elements 22 penetrate between the products 11' in a different manner, or bend over the products themselves so as to produce an arrangement of minimum encumbrance.

Figures 1a and 2a also show that the device of this invention functions even more advantageously if the lateral wall-type elements 13, 13' and 13'' are held at an incline, in particular if the lateral elements are held at an angle so as converge between each other toward the center of the device in question. In this manner the products 11 and 11' assume a bowed position which allows the products themselves to be supported not merely by friction, but also thanks to some vertical components of support.

Figures 6-8 provide a top view of the product layers 11 and 11', some of them together with the individual elements constituting the product, which are of a most variable size but must still be capable of maintaining their stability when grasped by the device or when positioned in various layers on top of each other.

In this case the device may even be equipped with an actuator for each wall-type element, so as to achieve a better compacting of the product and a more reliable grasping action. Thanks to this provision for an individual control, it is in fact possible to operate the actuators independently and in accordance with any predetermined sequence, depending on the type of the product. If necessary, one may even contemplate the introduction of spacing elements of any shape or size, showed in a simplified manner under the numbers 24 and 25, so as to improve the products' adherence in the face of empty spaces or so-called channels which may be formed. This will in fact lead to a better supporting of the packages during the various motions, and clearly increase their anchoring points.

The example shows the hanging elements 21 all turned into the same direction, but according to the same innovative concept, it will also be possible to provide various hanging elements of various sizes, all turned in various directions. This will produce a reliable penetration of a large part of the same in the spaces between the products, thus substantially enhancing their chance to maintain a layer suitable for gripping. These mentioned hanging elements or partitions may even be of a retractable type moved by actuators, such as cylinders, installed on the frame of the device.

It is obvious that the wall-type elements function as clutches when they are actuated to move toward each other, and tighten the products forming a layer so as to prevent them from falling off, by attrition, during the subsequent palletizing operations. The tightening force will at any rate not be such as to cause unacceptable permanent deformations of the products, but be capable of generating a compact arrangement of the same and a resulting better stability of the final layer.

Figure 9 is a view of a pallet element 26 of a box-type form, suitable for use with a device of this invention.

In this case the device must allow a careful manipulation of the products during the introduction and extraction phases from the pallet element 26.

The wall-type elements 13, 13' and 13'' must produce a compression of the products 11 and 11' with the broadest variety of sizes composing the layer.

The lifting, shifting and lowering of the device into the pallet element 26 will then take place, while releasing the layer.

The operating system is substantially similar to that previously observed for the traditional pallet elements, while taking into account the encumbrances of the grasping device (both for wall-type or clutch-type elements in an open or closed position). In a ground view, the device of this invention must have an encumbrance less than the internal size of the pallet element 26 even in a released position.

In fact, the compression generated by the device on the products allows extracting the device from the pallet element 26 once the layer of products has been released following the device extraction from the pal let element 26. Once released, the products reoccupy the entire space within the pallet element.

Even this action is made possible thanks to the palletizing device for associated products of various size and shape according to this invention.

As already mentioned, the device of this invention achieves a gripping action on the products on all four sides of a layer, thus guaranteeing a stable and reliable grip; this is of course independent of their reciprocal shape and disposition.

## Claims

1. A palletizing device for associated products of various size and shape, characterized in that it comprises a supporting structure composed of a base plate (12) with associated wall-type elements (13, 13', 13'') extending toward the bottom, so as to form a box-type element turned upside-down and open toward the bottom, capable of accepting a certain number of products of various size and shape (11, 11') placed side by side to form a layer, wherein the lateral wall-type elements (13, 13', 13'') can be shifted by at least one actuator (14, 14'; 15-19) between a position holding a number of products simply placed side by side and a position in tight contact with the same number of compacted products.

2. A device according to claim 1, characterized in that said lateral wall-type elements (13, 13', 13'') are arranged at an incline and converging toward each other in the direction of the center of the device in question.

3. A device according to claim 1 or 2, characterized in that said base plate (12) between said lateral wall-type elements (13, 13', 13'') carries certain elements hanging toward the bottom (22) and spaced out between each other.

4. A device according to claim 3, characterized in that said elements hanging toward the bottom (22) are rigid or of a flexible belt type.

5. A device according to claim 3, characterized in that said elements hanging toward the bottom (22) are fixed or retractable partitions.

6. A device according to claims 1 or 2, characterized in that said lateral wall-type elements (13, 13', 13'') can each be shifted in opposing pairs by a respective actuator (14, 14') so as to approach or move apart from each other.

7. A device according to claims 1 or 2, characterized in that each of these lateral wall-type elements (13, 13', 13'') can be shifted by an actuator (14, 14') so as to approach or move apart from the other lateral wall-type elements (13, 13', 13'').

8. A device according to claim 1, characterized in that between the mentioned number of products of variable size and shape (11, 11') placed side by side to form a layer a spacing element (24, 25) of any shape and size is introduced.

9. A device according to claim 1, characterized in that it arranges layers of the said number of products of various size and shape (11, 11') placed side by side in a pallet element of a box-type shape (26).
